# EUROPÄISCHE PATENTSCHRIFT

(11) **EP 3 585 589 B1**
(45) Veröffentlichungstag und Bekanntmachung des Hinweises auf die Patenterteilung: **18.05.2022**
(21) Anmeldenummer: 18706256.7
(22) Anmeldetag: 20.02.2018
(51) Int. Cl.: B29C 48/025, B29C 48/30, B29C 48/695, B29C 48/345

(54) **SCHMELZEKANAL UND EXTRUSIONSVORRICHTUNG**
MELT CHANNEL AND EXTRUSION DEVICE
CANAL POUR MASSE FONDUE ET DISPOSITIF D'EXTRUSION

(30) Priorität: 24.02.2017 DE 102017103889
(43) Veröffentlichungstag der Anmeldung: 01.01.2020
(73) Patentinhaber: Collin Lab & Pilot Solutions GmbH, 83558 Maitenbeth (DE)
(72) Erfinder: KASTNER, Friedrich, 4710 Grieskirchen (AT)
(74) Vertreter: Humpl-Wagner, Esther
(86) Internationale Anmeldenummer: PCT/EP2018/054088
(87) Internationale Veröffentlichungsnummer: WO 2018/153832

(56) Entgegenhaltungen:
- WO-A1-99/19129
- CN-U- 203 726 733
- US-A1- 2002 000 685
- US-A1- 2006 261 521

## Beschreibung

Die Erfindung betrifft einen Schmelzekanal und eine Extrusionsvorrichtung mit einem solchen Schmelzekanal. Der Schmelzekanal ist vorgesehen, dass durch diesen eine Kunststoffschmelze gefördert wird. Der Schmelzekanal bzw. die Extrusionsvorrichtung sind insbesondere zum Coextrudieren von Kunststoffprodukten vorgesehen.

Die Druckschrift DE 195 40 908 A1 offenbart eine Schmelzeleitung, die zum Fördern eines schmelzeflüssigen Kunststoffs zwischen einer Fördereinrichtung und einer Austragseinrichtung vorgesehen ist.

Die Druckschrift US 2002/000685 A1 offenbart eine Vorrichtung und ein Verfahren zum Formen eines Produkts aus laminar fließendem Material, welches in eine Form fließt durch die Herstellung signifikant ausgeglichener Zustände der konzentrischen Laminaten des Materials.

Die Aufgabe der Erfindung ist es, eine verbesserten Schmelzekanal mit einem Einlass und zwei Auslässen anzugeben.

Die Aufgabe wird gelöst durch einen Schmelzekanal für eine Extrusionsvorrichtung, aufweisend
- einen Einlass, der vorgesehen ist, im bestimmungsgemäßen Betrieb des Schmelzekanals zumindest indirekt mit einer Vorrichtung zum Herstellen einer Kunststoffschmelze verbunden zu sein, um die Kunststoffschmelze durch den Schmelzekanal zu fördern,
- einen ersten und einen zweiten Auslass,
- einen innerhalb einer ersten Ebene verlaufenden ersten Kanalabschnitt mit einem ersten Ende und einem zweiten Ende, der mit seinem ersten Enden dem Einlass zugewandt ist oder den Einlass bildet,
- einen innerhalb einer zweiten Ebene verlaufenden zweiten Kanalabschnitt mit einem ersten und einem zweiten Ende, dessen erstes Ende direkt oder über einen dritten Kanalabschnitt mit dem zweiten Ende des ersten Kanalabschnitts verbunden ist, wobei die zweite Ebene beabstandet und parallel zur ersten Ebene verläuft,
- einen in der ersten Ebene verlaufenden vierten Kanalabschnitt mit einem ersten und einem zweiten Ende und einen fünften Kanalabschnitt mit einem ersten und einem zweiten Ende, wobei die ersten Enden des vierten und des fünften Kanalabschnitts direkt miteinander verbunden sind, und die ersten Enden des vierten und des fünften Kanalabschnitts direkt oder über einen sechsten Kanalabschnitt mit dem zweiten Ende des zweiten Kanalabschnitts verbunden sind, das zweite Ende des vierten Kanalabschnitts dem ersten Auslass zugewandt ist oder den ersten Auslass bildet, und das zweite Ende des fünften Kanalabschnitts dem zweiten Auslass zugewandt ist oder den zweiten Auslass bildet,
wobei der erste Kanalabschnitt gekrümmt ausgeführt ist, und/oder der zweite Kanalabschnitt gekrümmt ausgeführt ist oder gerade ausgeführt ist und derart innerhalb der zweiten Ebene verläuft, dass sich die Förderrichtung der Kunststoffschmelze innerhalb des zweiten Kanalabschnitts von der Förderrichtung der Kunststoffschmelze im Bereich des zweiten Endes des ersten Kanalabschnitts unterscheidet.

Die Aufgabe der Erfindung wird auch gelöst durch einen Schmelzekanal für eine Extrusionsvorrichtung, aufweisend
- einen Einlass, der vorgesehen ist, im bestimmungsgemäßen Betrieb des Schmelzekanals zumindest indirekt mit einer Vorrichtung zum Herstellen einer Kunststoffschmelze verbunden zu sein, um die Kunststoffschmelze durch den Schmelzekanal zu fördern,
- einen ersten und einen zweiten Auslass,
- einen innerhalb einer ersten Ebene verlaufenden ersten Kanalabschnitt mit einem ersten Ende und einem zweiten Ende, der mit seinem ersten Enden dem Einlass zugewandt ist oder den Einlass bildet und der insbesondere gekrümmt ausgeführt ist,
- einen innerhalb einer zweiten Ebene verlaufenden siebten Kanalabschnitt mit einem ersten und einem zweiten Ende, wobei die zweite Ebene beabstandet und parallel zur ersten Ebene verläuft,
- einen innerhalb der zweiten Ebene verlaufenden achten Kanalabschnitt mit einem ersten und einem zweiten Ende, wobei die ersten Enden des siebten und achten Kanalabschnitts direkt miteinander verbunden sind, und die ersten Enden des siebten und des achten Kanalabschnitts direkt oder über einen dritten Kanalabschnitt mit dem zweiten Ende des ersten Kanalabschnitts verbunden sind,
- einen innerhalb der ersten Ebene verlaufenden neunten Kanalabschnitt mit einem ersten und einem zweiten Ende, dessen erstes Ende direkt oder über einen zehnten Kanalabschnitt mit dem zweiten Ende des siebten Kanalabschnitts verbunden ist und dessen zweites Ende dem ersten Auslass zugewandt ist oder den ersten Auslass bildet, und
- einen innerhalb der ersten Ebene verlaufenden elften Kanalabschnitt mit einem ersten und einem zweiten Ende, dessen erstes Ende direkt oder über einen zwölften Kanalabschnitt mit dem zweiten Ende des achten Kanalabschnitts verbunden ist und dessen zweites Ende dem zweiten Auslass zugewandt ist oder den zweiten Auslass bildet.

Ein weiterer Aspekt der Erfindung betrifft eine Extrusionsvorrichtung, aufweisend eine Vorrichtung zum Herstellen einer Kunststoffschmelze und den erfindungsgemäßen Schmelzekanal, dessen Einlass zumindest indirekt mit der Vorrichtung zum Herstellen einer Kunststoffschmelze verbunden ist, um die Kunststoffschmelze durch den Schmelzekanal zu fördern. Die Vorrichtung zum Herstellen einer Kunststoffschmelze ist beispielsweise ein Extruder.

Die Auslässe des Schmelzekanals können zumindest indirekt mit jeweils einer Düse verbunden sein. Die Auslässe des Schmelzekanals können auch derart ausgebildet sein, dass sie jeweils eine Düse bilden.

Der erfindungsgemäße Schmelzekanal umfasst demnach mehrere Kanalabschnitte, den Einlass, der vorgesehen ist, im bestimmungsgemäßen Betrieb des Schmelzekanals zumindest indirekt mit der Vorrichtung zum Herstellen einer Kunststoffschmelze verbunden zu sein, um die Kunststoffschmelze durch den Schmelzekanal zu fördern, und zwei Auslässe, nämlich den ersten und einen zweiten Auslass. Da der Schmelzekanal zwei Auslässe umfasst, bilden Kanalabschnitte eine Verzweigung.

Zumindest einige der Kanalabschnitte verlaufen in den beiden Ebenen, d.h. in der ersten und der zweiten Ebene. Das den Einlass bildende Ende bzw. das dem Einlass zugewandte Ende, d.h. das erste Ende des ersten Kanalabschnitts, und die die Auslässe bildenden Enden bzw. die den Auslässen zugewandten Enden des Schmelzekanals bzw. die entsprechenden Kanalabschnitte verlaufen in der ersten Ebene. Da zwischen dem Einlass und den Auslässen zumindest ein Kanalabschnitt in der zur ersten Ebene parallelen zweiten Ebene verläuft, können durch die Umlenkung der Schmelze aus der ersten Ebene in die zweite Ebene partielle Geschwindigkeitsunterschiede bezüglich des Querschnitts des Schmelezkanals aufgrund einer Richtungsänderung innerhalb der ersten bzw. zweiten Ebene zumindest kompensiert, wenn nicht gar ausgeglichen werden. Dadurch kann die durch den Schmelzekanal geförderte Kunststoffschmelze gleichmäßiger auf die beiden Auslässe verteilt werden.

Die beiden Ebenen können vorzugsweise horizontal ausgerichtet sein. Insbesondere kann die zweite Ebene oberhalb der ersten Ebene angeordnet sein.

Gemäß einer ersten Ausführungsform des erfindungsgemäßen Schmelzekanals wird die eben erwähnte Verzweigung durch den in der ersten Ebene verlaufenden vierten und fünften Kanalabschnitt gebildet, deren erste Enden direkt miteinander verbunden sind. Die zweiten Enden dieser Kanalabschnitte bilden die beiden Auslässe bzw. sind den beiden Auslässen zugewandt.

Gemäß der ersten Ausführungsform des erfindungsgemäßen Schmelzekanals sind der erste Kanalabschnitt und diese Verzweigung über den innerhalb der zweiten Ebene verlaufenden zweiten Kanalabschnitt miteinander verbunden. Dabei kann es vorgesehen sein, dass der erste Kanalabschnitt mit seinem zweiten Ende direkt mit dem zweiten Kanalabschnitt oder über den dritten Kanalabschnitt verbunden ist. Die Verzweigung, insbesondere die ersten Enden des vierten und fünften Kanalabschnitts, ist ebenfalls direkt oder über den sechsten Kanalabschnitt mit dem zweiten Kanalabschnitt verbunden.

Vorzugsweise zeigt das erste Ende des ersten Kanalabschnitts in eine andere Richtung als die zweiten Enden des vierten und fünften Kanalabschnitts. Der vierte und fünfte Kanalabschnitt können derart ausgebildet sein, dass deren zweiten Enden in dieselbe Richtung zeigen. Um dies zu erreichen, bedarf es der erwähnten Richtungsänderung. Diese wird dadurch erreicht, indem der erste Kanalabschnitt gekrümmt ausgeführt ist, und/oder der zweite Kanalabschnitt gekrümmt ausgeführt ist oder gerade ausgeführt ist und derart innerhalb der zweiten Ebene verläuft, dass sich die Förderrichtung der Kunststoffschmelze innerhalb des zweiten Kanalabschnitts von der Förderrichtung der Kunststoffschmelze im Bereich des zweiten Endes des ersten Kanalabschnitts unterscheidet.

Vorzugsweise sind die den zweiten Enden des vierten und fünften Kanalabschnitts zugeordnete Richtungen um 90° gedreht relativ zu der dem ersten Ende des ersten Kanalabschnitts zugeordneten Richtung.

Der erste Kanalabschnitt kann insbesondere bogenförmig gekrümmt sein.

Im Falle des gekrümmten ersten Kanalabschnitts ist dieser vorzugsweise mit einer Krümmung von 90° versehen.

Nach einer Ausführungsform des erfindungsgemäßen Schmelzekanals verläuft der erste Kanalabschnitt gerade oder zumindest im Bereich seines zweiten Endes gerade. In diesem Fall ist vorzugsweise die Projektion des zweiten Kanalabschnitts in die erste Ebene relativ zum ersten Kanalabschnitt oder dessen erstes Ende in einem Winkel größer als Null, vorzugsweise in einem Winkel von 90° ausgerichtet. Dies lässt sich relativ einfach produktionstechnisch erreichen.

Der zweite Kanalabschnitt kann bogenförmig gekrümmt und/oder mit einer Krümmung von 90° versehen sein.

Gemäß einer Variante des erfindungsgemäßen Schmelzekanals können der vierte und der fünfte Kanalabschnitt gerade verlaufen. In diesem Fall weisen der vierte und der fünfte Kanalabschnitt vorzugsweise gleiche Längen auf und /der erstrecken sich entlang einer gemeinsamen Längsachse.

Der vierte und der fünfte Kanalabschnitt können auch gekrümmt ausgeführt sein. Insbesondere können der vierte und der fünfte Kanalabschnitt bogenförmig gekrümmt sein und/oder mit einer Krümmung von 90° verlaufen.

Der vierte und der fünfte Kanalabschnitt können jeweils in den Bereichen ihrer ersten Enden gerade Abschnitte und jeweils einen weiteren Abschnitt aufweisen, die direkt mit dem jeweiligen geraden Abschnitt verbunden sind. Die geraden Abschnitte erstrecken sich insbesondere entlang einer gemeinsamen Längsachse und/oder weisen gleiche Längen auf. Die weiteren Abschnitte sind vorzugsweise gerade und schließen vorzugsweise mit den entsprechenden geraden Abschnitten einen Winkel von 90° ein.

Wenn der erste Kanalabschnitt gerade verläuft oder im Bereich seines zweiten Endes gerade ist, dann verlaufen vorzugsweise die geraden Abschnitte des vierten und fünften Kanalabschnitts parallel zum ersten Kanalabschnitt bzw. zu dessen geraden Abschnitt.

Der zweite Kanalabschnitt kann direkt mit dem ersten bzw. dem vierten und fünften Kanalabschnitt verbunden sein oder über den dritten und sechsten Kanalabschnitt. Der dritte Kanalabschnitt ist beispielsweise in einem Winkel von wenigstens 45° von der ersten Ebene in Richtung der zweiten Ebene geführt. Vorzugsweise ist der dritte Kanalabschnitt rechtwinklig zu den beiden Ebenen ausgerichtet. Der sechste Kanalabschnitt ist beispielsweise in einem Winkel von wenigstens 45° von der zweiten Ebene in Richtung der ersten Ebene geführt. Vorzugsweise ist der sechste Kanalabschnitt rechtwinklig zu den beiden Ebene ausgerichtet.

Gemäß einer zweiten Ausführungsform des erfindungsgemäßen Schmelzekanals wird die erwähnte Verzweigung durch den in der zweiten Ebene verlaufenden siebten und achten Kanalabschnitt gebildet, deren erste Enden direkt miteinander verbunden sind.

Der siebte und der achte Kanalabschnitt können gerade verlaufen. In diesem Fall weisen diese insbesondere gleiche Längen auf und/oder erstrecken sich entlang einer gemeinsamen Längsachse.

Der erste Kanalabschnitt kann bogenförmig gekrümmt und/oder mit einer Krümmung von 90° versehen sein. Vorzugsweise umfasst der erste Kanalabschnitt einen das ersten Ende des ersten Kanalabschnitts umfassenden geraden Abschnitt und einen das zweiten Ende des ersten Kanalabschnitts umfassenden gekrümmten Abschnitt. Der gekrümmte Abschnitt des ersten Kanalabschnitts kann bogenförmig gekrümmt und/oder mit einer Krümmung von 90° versehen sein.

Vorzugsweise verlaufen der gerade Abschnitt des ersten Kanalabschnitts parallel zum gerade verlaufenden siebten und achten Kanalabschnitt.

Vorzugsweise zeigt das erste Ende des ersten Kanals in eine andere Richtung als die zweiten Enden des neunten und elften Kanalabschnitts. Der neunte und elfte Kanalabschnitt können derart ausgebildet sein, dass deren zweite Enden in dieselbe Richtung zeigen.

Vorzugsweise sind die den zweiten Enden des neunten und elften Kanalabschnitts zugeordneten Richtungen um 90° gedreht relativ zu der dem ersten Ende des ersten Kanalabschnitts zugeordneten Richtung.

Der siebte und achte Kanalabschnitt können direkt mit dem ersten Kanalabschnitt verbunden sein oder über den dritten Kanalabschnitt. Der dritte Kanalabschnitt ist beispielsweise in einem Winkel von wenigstens 45° von der ersten Ebene in Richtung der zweiten Ebene geführt. Vorzugsweise ist der dritte Kanalabschnitt rechtwinklig zu den beiden Ebene ausgerichtet.

Die einzelnen Kanalabschnitte des erfindungsgemäßen Schmelzekanals können z.B. Rohre sein. Der erfindungsgemäßen Schmelzekanal kann aber auch als Bohrungen ausgeführt sein.

Vorzugsweise umfasst der erfindungsgemäße Schmelzekanal mehrere Platten, in denen die Kanalabschnitte z.B. durch Fräsen angeordnet sind. Insbesondere ist es vorgesehen, dass die in der ersten Ebene verlaufenden Kanalabschnitte in einer ersten Platte und die in der zweiten Ebene verlaufenden Kanalabschnitte in einer zweiten Platte angeordnet sind. Die beiden Platten sind dann z.B. übereinander angeordnet. Vorzugsweise sind die beiden Platten miteinander verschraubt.

Beispielsweise können die erste Platte der ersten Ebene und die zweite Platte der zweiten Ebene zugeordnet sein.

Die Platten sind z.B. aus Metall.

Die erste und die zweite Platte weisen insbesondere jeweils eine erste und eine zweite Seite auf. Die relevanten Kanalabschnitte sind z.B. in die ersten Seiten dieser Platten z.B. durch Fräsen angeordnet. In diesem Fall kann es vorgesehen sein, dass die zweite Platte derart über der ersten Platte angeordnet ist, dass dessen zweite Seite die Kanalabschnitte in der ersten Platte abschließen. Die erste Seite der zweiten Platte kann dann durch eine weitere Platte abgedeckt sein, die vorzugsweise aus Metall gefertigt ist. Vorzugsweise sind die erste, zweite und weitere Platte miteinander verschraubt.

Es aber auch möglich, dass die zweite Platte mit ihrer ersten Seite auf der ersten Seite der ersten Platte aufliegt. In diesem Fall ist es insbesondere vorgesehen, dass das erste Ende des zweiten Kanalabschnitts direkt mit dem zweiten Ende des ersten Kanalabschnitts und die ersten Enden des vierten und des fünften Kanalabschnitts direkt mit dem zweiten Ende des zweiten Kanalabschnitts verbunden sind, bzw. dass die ersten Enden des siebten und achten Kanalabschnitts direkt mit dem zweiten Ende des ersten Kanalabschnitts, das erste Ende des neunten Kanalabschnitts direkt mit dem zweiten Ende des siebten Kanalabschnitts und das erste Ende des elften Kanalabschnitts direkt mit dem zweiten Ende des achten Kanalabschnitts verbunden ist.

Es ist aber auch möglich, dass der Schmelzekanal zusätzlich zur ersten und zweiten Platte eine dritte Platte umfasst. Die dritte Platte ist vorzugsweise zwischen der ersten und zweiten Platte angeordnet, wobei die ersten Seiten der ersten und der zweiten Platte einander zugewandt sind und der dritte und sechste Kanalabschnitt bzw. der dritte, zehnte und zwölfte Kanalabschnitt als Bohrungen in der dritten Platte realisiert sind.

Vorzugsweise sind die erste, zweite und gegebenenfalls die dritte Platte miteinander verschraubt.

Vorzugsweise sind der erste, vierte und fünfte Kanalabschnitt in der ersten Platte und der zweite Kanalabschnitt in der zweiten Platte angeordnet, bzw. der erste, neunte und elfte Kanalabschnitt in der ersten Platte und der siebte und achte Kanalabschnitt in der zweiten Platte angeordnet.

Ausführungsbeispiele der Erfindung sind exemplarisch in den beigefügten schematischen Figuren dargestellt. Es zeigen:
- Fig. 1: eine Extrusionsvorrichtung mit einem Extruder und einem dem Extruder nachfolgenden Schmelzekanal,
- Fig. 2: den Schmelzekanal in einer perspektivischen Darstellung,
- Fig. 3: einen Schnitt durch den Schmelzekanal,
- Fig. 4: einen Schnitt durch eine alternative Ausführungsform des Schmelzekanals,
- Fig. 5: einen weiteren alternativen Schmelzekanal in einer perspektivischen Darstellung, und
- Fig. 6: einen weiteren Schmelzekanal in einer perspektivischen Darstellung,
- Fig. 7: einen Schnitt durch den weiteren Schmelzekanal,
- Fig. 8: einen Schnitt durch eine alternative Ausführungsform des weiteren Schmelzekanals.

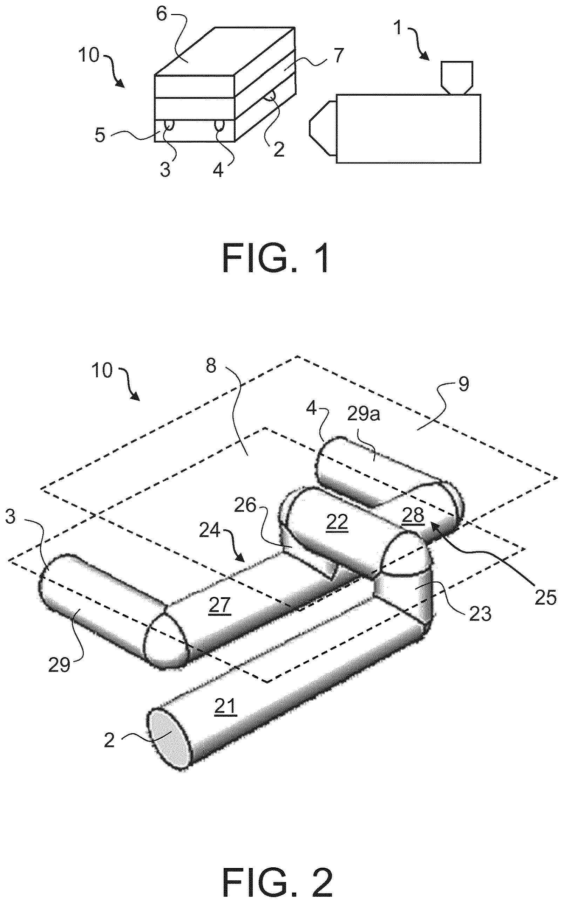

Die Fig. 1 zeigt eine Extrusionsvorrichtung, die einen Extruder 1 als Beispiel einer Vorrichtung zum Herstellen einer Kunststoffschmelze und einen Schmelzekanal 10. Der Schmelzekanal 10 ist in der Fig. 2 in einer perspektivischen Darstellung gezeigt.

Der Schmelzekanal 10 umfasst einen Einlass 2, einen ersten Auslass 3 und einen zweiten Auslass 4, sowie mehrere Kanalabschnitte.

Der Extruder 1 ist eingerichtet, die Kunststoffschmelze herzustellen. Der Extruder 1 ist zumindest indirekt mit dem Einlass 2 des Schmelzekanals 10 verbunden, sodass die Kunststoffschmelze vom Einlass 2 durch den Schmelzekanal 10 zu den beiden Auslässen 3, 4 gefördert wird.

Zwischen dem Extruder 1 und dem Schmelzekanal 10 kann ein nicht dargestellter Filter geschaltet sein, welcher die Kunststoffschmelze filtert, bevor diese durch den Schmelzkanal 10 gefördert wird.

Zwischen dem Extruder 1 und dem Schmelzekanal 10 kann eine nicht dargestellte Pumpe zum verbesserten Fördern der Kunststoffschmelze durch den Schmelzkanal 10 vorgesehen sein.

Im Falle des vorliegenden Ausführungsbeispiels umfasst der Schmelzekanal 10 eine erste Platte 5, eine zweite Platte 6 und eine dritte Platte 7.

Im Falle des vorliegenden Ausführungsbeispiels sind die Platte 5, 6, 7 horizontal ausgerichtet.

Den beiden Auslässen 3, 4 sind im Falle des vorliegenden Ausführungsbeispiels jeweils eine nicht dargestellte Düse nachgeschaltet oder die Auslässe 3, 4 sind als Düsen ausgebildet.

Im Falle des vorliegenden Ausführungsbeispiels weist der Schmelzekanal 10 einen innerhalb einer ersten Ebene 8 verlaufenden ersten Kanalabschnitt 21 auf, der ein erstes Ende und ein zweites Ende umfasst. Das erste Ende des ersten Kanalabschnitts 21 bildet z.B. den Einlass 3 des Schmelzekanals 10. Der erste Kanalabschnitt 21 verläuft im Falle des vorliegenden Ausführungsbeispiels gerade, kann aber auch gekrümmt sein.

Im Falle des vorliegenden Ausführungsbeispiels weist der Schmelzekanal 10 einen innerhalb einer zweiten Ebene 9 verlaufenden zweiten Kanalabschnitt 22 mit einem ersten und einem zweiten Ende auf. Der zweite Kanalabschnitt 22 verläuft gerade.

Die beiden Ebenen 8, 9 sind voneinander beabstandet und parallel. Die beiden Ebenen 8, 9 verlaufen vorzugsweise horizontal. Die zweite Ebene 9 ist insbesondere oberhalb der ersten Ebene 8 ausgerichtet.

Der Schmelzekanal 10 kann einen dritten Kanalabschnitt 23 aufweisen, welcher den ersten Kanalabschnitt 21 mit dem zweiten Kanalabschnitt 22 verbindet. Der dritte Kanalabschnitt 23 ist insbesondere mit dem zweiten Ende des ersten Kanalabschnitts 21 und mit dem ersten Ende des zweiten Kanalabschnitts 22 verbunden. Der erste Kanalabschnitt 21 kann auch mit seinem zweiten Ende direkt mit dem ersten Ende des zweiten Kanalabschnitts 22 verbunden sein.

Die beiden Ebenen 8, 9 verlaufen vorzugsweise horizontal. Die zweite Ebene 9 ist insbesondere oberhalb der ersten Ebene 8 ausgerichtet.

Der Schmelzekanal 10 umfasst ferner einen in der ersten Ebene 8 verlaufenden vierten Kanalabschnitt 24 und einen in der ersten Ebene 8 verlaufenden fünften Kanalabschnitt 25. Der vierte und der fünfte Kanalabschnitt weisen jeweils ein erstes und ein zweites Ende auf.

Die ersten Enden des vierten Kanalabschnitts 24 und des fünften Kanalabschnitts 25 sind direkt miteinander und über einen sechsten Kanalabschnitt 26 des Schmelzekanals 10 mit dem zweiten Ende des zweiten Kanalabschnitts 22 verbunden. Die ersten Enden des vierten Kanalabschnitts 24 und des fünften Kanalabschnitts 25 können auch direkt mit dem zweiten Ende des zweiten Kanalabschnitts 22 verbunden sein.

Der vierte und der fünfte Kanalabschnitt 24, 25 bilden somit eine Verzweigung für die Kunststoffschmelze.

Im Falle des vorliegenden Ausführungsbeispiels bildet das zweite Ende des vierten Kanalabschnitts 24 den ersten Auslass 3 und das zweite Ende des fünften Kanalabschnitts 25 den zweiten Auslass 4.

Im Falle des vorliegenden Ausführungsbeispiels ist die Projektion des zweiten Kanalabschnitts 22 in die erste Ebene 8 relativ zum ersten Kanalabschnitt 21 in einem Winkel von 90° gedreht.

Der vierte und der fünfte Kanalabschnitt 24, 25 können gerade verlaufen. In diesem Fall weisen der vierte und der fünfte Kanalabschnitt 24, 25 vorzugsweise gleiche Längen auf und /oder erstrecken sich entlang einer gemeinsamen Längsachse.

Der vierte und der fünfte Kanalabschnitt 24, 25 können auch gekrümmt ausgeführt sein. Insbesondere kann der vierte und der fünfte Kanalabschnitt 24, 25 bogenförmig gekrümmt sein und/oder mit einer Krümmung von 90° verlaufen.

Im Falle des vorliegenden Ausführungsbeispiels weisen der vierte und der fünfte Kanalabschnitt 24, 25 jeweils in den Bereichen ihrer ersten Enden gerade Abschnitte 27, 28 und jeweils einen weiteren Abschnitt 29, 29a auf, die direkt mit dem jeweiligen geraden Abschnitt 27, 28 verbunden sind. Die geraden Abschnitte 27, 28 erstrecken sich insbesondere entlang einer gemeinsamen Längsachse und/oder weisen gleiche Längen auf. Die weiteren Abschnitte 29, 29a sind vorzugsweise gerade und schließen vorzugsweise mit den entsprechenden geraden Abschnitten 27, 28 einen Winkel von 90° ein.

Im Falle des vorliegenden Ausführungsbeispiels verlaufen die geraden Abschnitte 27, 28 des vierten und fünften Kanalabschnitts 24, 25 parallel zum ersten Kanalabschnitt 21.

Im Falle des vorliegenden Ausführungsbeispiels zeigen die beiden Auslässe 3, 4 in dieselbe Richtung. Der Einlass 2 zeigt in eine um 90° gedrehte Richtung im Vergleich zu den Richtungen der beiden Auslässe 3, 4.

Im Falle des vorliegenden Ausführungsbeispiels umfasst der Schmelzekanal 10 eine erste Platte 5, eine zweite Platte 6 und eine dritte Platte 7.

Die erste, zweite und dritte Platte 5, 6, 7 weisen jeweils eine erste und eine zweite Seite auf.

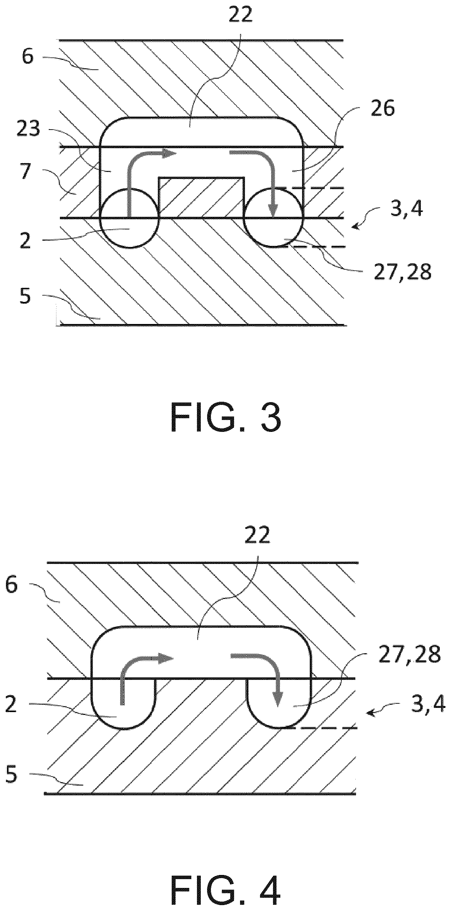

Im Falle des vorliegenden Ausführungsbeispiels ist die dritte Platte 7 zwischen der ersten und der zweiten Platte 5, 6 angeordnet und die ersten Seiten der ersten und zweiten Platte 5, 6 sind einander zugewandt. Ein Schnitt durch die Platte 5, 6, 7 ist in der Fig. 3 gezeigt.

Im Falle des vorliegenden Ausführungsbeispiels ist die erste Platte 5 der ersten Ebene 8 und die zweite Platte 6 der zweiten Ebene 9 zugeordnet. Der erste, vierte und fünfte Kanalabschnitt 21, 24, 25 sind in der ersten Seite der ersten Platte 5 und der zweite Kanalabschnitt 22 ist in der ersten Seite der zweiten Platte 6 z.B. durch Fräsen angeordnet. In der dritten Platte 7 sind der dritte und der sechste 23, 26 Kanalabschnitt 23, 26 angeordnet.

Die Platten 5, 6, 7 sind miteinander verbunden, insbesondre lösbar verbunden, indem sie z.B. miteinander verschraubt sind. Die Platten 5, 6, 7 sind insbesondere aus Metall.

Im Falle des vorliegenden Ausführungsbeispiels sind die Platte 5, 6, 7 horizontal ausgerichtet.

Alternativ umfasst der Schmelzekanal 10 beispielsweise nicht die dritte Platte 7, also nur die erste und die zweite Platte 5, 6, wobei deren ersten Seiten aufeinanderliegen. In diesem Fall ist es insbesondere vorgesehen, dass das erste Ende des zweiten Kanalabschnitts 22 direkt mit dem zweiten Ende des ersten Kanalabschnitts 21 und die ersten Enden des vierten und des fünften Kanalabschnitts 24, 25 direkt mit dem zweiten Ende des zweiten Kanalabschnitts 22 verbunden sind. Ein Schnitt dieser Ausführungsform ist in der Fig. 4 gezeigt.

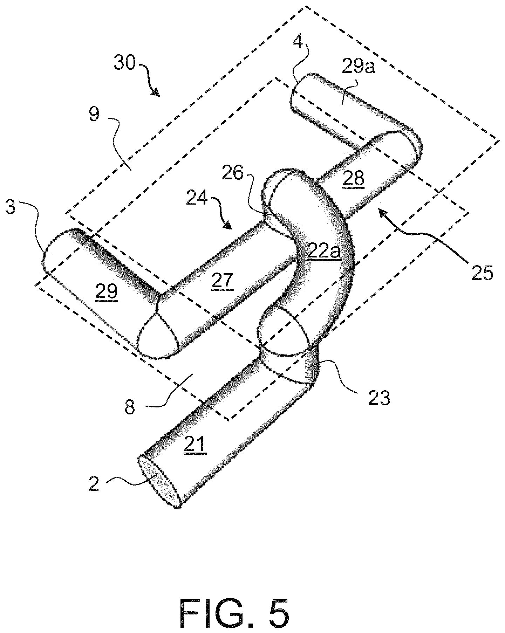

Die Figur 5 zeigt eine alternative Ausführungsform eines Schmelzekanals 30, welcher insbesondere anstelle des in der Fig. 2 gezeigten Schmelzekanal 10 für die Extrusionsvorrichtung 1 verwendet werden kann. Wenn nicht anders beschrieben, dann sind Bestandteile der in der Fig. 5 gezeigten alternative Ausführungsform des Schmelzekanals 30, welche mit Bestandteilen des in der Fig. 2 gezeigten Schmelzekanals 10 im Wesentlichen bau- und funktionsgleich sind, mit denselben Bezugszeichen versehen.

Der in der Fig. 3 gezeigte Schmelzekanal 30 unterscheidet sich im Wesentlichen von dem in der Fig. 2 gezeigten Schmelzekanal 10 durch seinen zweiten Kanalabschnitt, der in der Fig. 3 mit dem Bezugszeichen 22a versehen ist. Dieser zweite Kanalabschnitt 22a verläuft ebenfalls innerhalb der zweiten Ebene 9, ist aber gekrümmt ausgeführt. Der zweite Kanalabschnitt 22a ist insbesondere bogenförmig gekrümmt und weist insbesondere eine Krümmung von 90° auf.

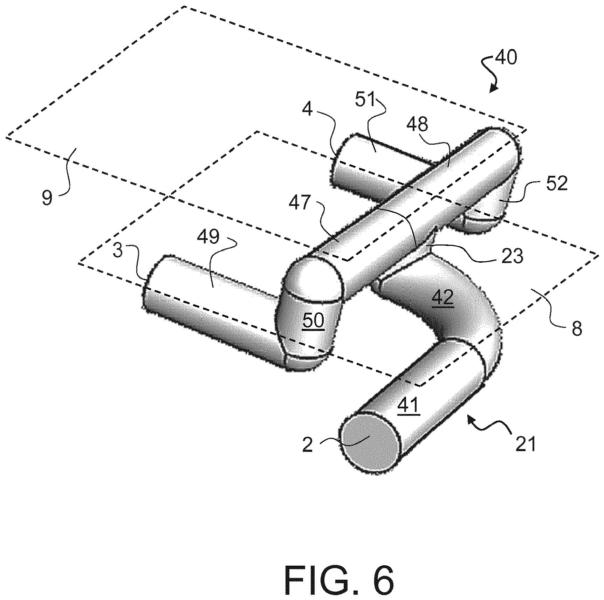

Die Figur 6 zeigt einen weiteren Schmelzekanal 40, welche insbesondere anstelle des in der Fig. 2 gezeigten Schmelzekanals 10 für die Extrusionsvorrichtung 1 verwendet werden kann. Wenn nicht anders beschrieben, dann sind Bestandteile des in der Fig. 6 gezeigten weiteren Schmelzekanals 40, welche mit Bestandteilen des in der Fig. 2 gezeigten Schmelzekanals 10 im Wesentlichen bau- und funktionsgleich sind, mit denselben Bezugszeichen versehen.

Der in der Fig. 6 gezeigte weitere Schmelzekanal 40 unterscheidet sich im Wesentlichen von dem in der Fig. 2 gezeigten Schmelzekanal 10 dadurch, dass die Verzweigung nicht innerhalb der ersten Ebene 8, sondern innerhalb der zweiten Ebene 9 verläuft.

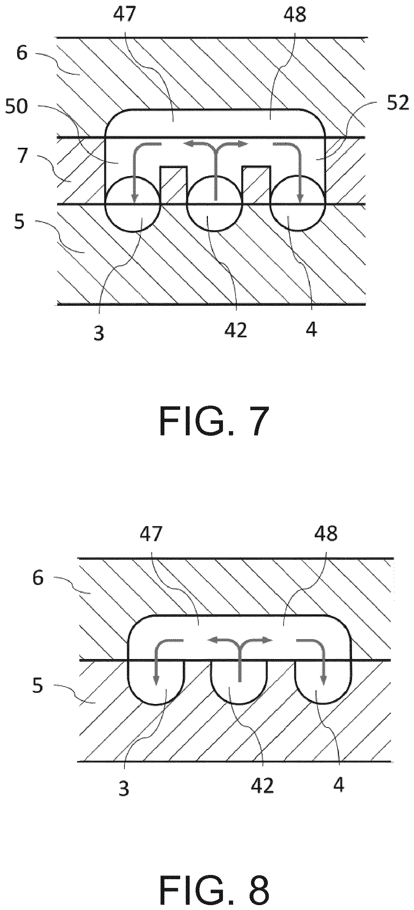

Die Fig. 7 zeigt einen Schnitt des weiteren Schmelzekanals 40 in einer Version mit drei Platten 5, 6, 7 und die Fig. 8 zeigt einen Schnitt einer alternativen Version des Schmelzekanals 40 mit zwei Platten 5, 6.

Anstelle des zweiten und vierten bis sechsten Kanalabschnitt 22, 24 - 26 umfasst der weitere Schmelzekanal 40 eine in der zweiten Ebene 9 verlaufenden siebten und achten Kanalabschnitt 47, 48, die jeweils ein erstes und ein zweites Ende umfassen. Diese Kanalabschnitte bilden eine Verzweigung für die Kunststoffschmelze. Die ersten Enden des siebten und achten Kanalabschnitts 27, 28 sind direkt miteinander und über den dritten Kanalabschnitt mit dem zweiten Ende des ersten Kanalabschnitts 21 verbunden. Die ersten Enden des siebten und achten Kanalabschnitts 27, 28 können auch direkt mit dem zweiten Ende des ersten Kanalabschnitts 21 verbunden sein.

Im Falle des vorliegenden Ausführungsbeispiels verlaufen der siebte und der achte Kanalabschnitt 47, 48 gerade, weisen insbesondere gleichen Längen auf und erstrecken sich insbesondere entlang einer gemeinsamen Längsachse.

Der weitere Schmelzekanal 40 umfasst einen innerhalb der ersten Ebene 8 verlaufenden neunten Kanalabschnitt 49 mit einem ersten und einem zweiten Ende, dessen erstes Ende über einen zehnten Kanalabschnitt 50 mit dem zweiten Ende des siebten Kanalabschnitts 47 verbunden ist und dessen zweites Ende den ersten Auslass 3 bildet. Der siebte und der neunte Kanalabschnitt 47, 49 können auch direkt miteinander verbunden sein.

Der weitere Schmelzekanal 40 umfasst einen innerhalb der ersten Ebene 8 verlaufenden elften Kanalabschnitt 51 mit einem ersten und einem zweiten Ende, dessen erstes Ende über einen zwölften Kanalabschnitt 52 mit dem zweiten Ende des achten Kanalabschnitts 48 verbunden ist und dessen zweites Ende den zweiten Auslass 4 bildet. Der achte und der elfte Kanalabschnitt 48, 51 können auch direkt miteinander verbunden sein.

Der erste Kanalabschnitt 21 umfasst im Falle des vorliegenden Ausführungsbeispiels einen das ersten Ende bzw. den Einlass 2 umfassenden geraden Abschnitt 41 und einen das zweiten Ende des ersten Kanalabschnitts 21 umfassenden gekrümmten Abschnitt 42. Der gekrümmte Abschnitt 42 des ersten Kanalabschnitts 21 ist insbesondere bogenförmig gekrümmt und ist mit einer Krümmung von 90° versehen.

Vorzugsweise verlaufen der gerade Abschnitt 41 des ersten Kanalabschnitts 21 parallel zum siebten und achten Kanalabschnitt 47, 48.

Vorzugsweise zeigen die Auslässe 3, 4 in dieselben Richtungen. Die Richtung des Einlasses 2 ist relativ zu den Richtungen der Auslässe 3, 4 um 90° gedreht.

## Patentansprüche

1. Schmelzekanal für eine Extrusionsvorrichtung, aufweisend
- einen Einlass (2), der vorgesehen ist, im bestimmungsgemäßen Betrieb des Schmelezkanals (10, 30) zumindest indirekt mit einer Vorrichtung (1) zum Herstellen einer Kunststoffschmelze verbunden zu sein, um die Kunststoffschmelze durch den Schmelzekanal (10, 30) zu fördern,
- einen ersten und einen zweiten Auslass (3, 4),
- einen innerhalb einer ersten Ebene (8) verlaufenden ersten Kanalabschnitt (21) mit einem ersten Ende und einem zweiten Ende, der mit seinem ersten Enden dem Einlass (2) zugewandt ist oder den Einlass (2) bildet,
- einen innerhalb einer zweiten Ebene (9) verlaufenden zweiten Kanalabschnitt (22, 22a) mit einem ersten und einem zweiten Ende, dessen erstes Ende direkt oder über einen dritten Kanalabschnitt (23) mit dem zweiten Ende des ersten Kanalabschnitts (21) verbunden ist, wobei die zweite Ebene (9) beabstandet und parallel zur ersten Ebene (8) verläuft,
- einen in der ersten Ebene (8) verlaufenden vierten Kanalabschnitt (24) mit einem ersten und einem zweiten Ende und einen fünften Kanalabschnitt (25) mit einem ersten und einem zweiten Ende, wobei die ersten Enden des vierten und des fünften Kanalabschnitts (24, 25) direkt miteinander verbunden sind, und die ersten Enden des vierten und des fünften Kanalabschnitts (24, 25) direkt oder über einen sechsten Kanalabschnitt (26) mit dem zweiten Ende des zweiten Kanalabschnitts (22) verbunden sind, das zweite Ende des vierten Kanalabschnitts (24) dem ersten Auslass (3) zugewandt ist oder den ersten Auslass (3) bildet, und das zweite Ende des fünften Kanalabschnitts (25) dem zweiten Auslass (4) zugewandt ist oder den zweiten Auslass (4) bildet,
wobei der erste Kanalabschnitt (21) gekrümmt ausgeführt ist, und/oder der zweite Kanalabschnitt (22, 22a) gekrümmt ausgeführt ist oder gerade ausgeführt ist und derart innerhalb der zweiten Ebene (9) verläuft, dass sich die Förderrichtung der Kunststoffschmelze innerhalb des zweiten Kanalabschnitts (22a) von der Förderrichtung der Kunststoffschmelze im Bereich des zweiten Endes des ersten Kanalabschnitts (21) unterscheidet.

2. Schmelzekanal für eine Extrusionsvorrichtung, aufweisend
- einen Einlass (2), der vorgesehen ist, im bestimmungsgemäßen Betrieb des Schmelezkanals (40) zumindest indirekt mit einer Vorrichtung (1) zum Herstellen einer Kunststoffschmelze verbunden zu sein, um die Kunststoffschmelze durch den Schmelzekanal (40) zu fördern,
- einen ersten und einen zweiten Auslass (3, 4),
- einen innerhalb einer ersten Ebene (8) verlaufenden ersten Kanalabschnitt (21) mit einem ersten Ende und einem zweiten Ende, der mit seinem ersten Enden dem Einlass (2) zugewandt ist oder den Einlass (2) bildet und der insbesondere gekrümmt ausgeführt ist,
- einen innerhalb einer zweiten Ebene (9) verlaufenden siebten Kanalabschnitt (47) mit einem ersten und einem zweiten Ende, wobei die zweite Ebene (9) beabstandet und parallel zur ersten Ebene (8) verläuft,
- einen innerhalb der zweiten Ebene (9) verlaufenden achten Kanalabschnitt (48) mit einem ersten und einem zweiten Ende, wobei die ersten Enden des siebten und achten Kanalabschnitts (47, 48) direkt miteinander verbunden sind, und die ersten Enden des siebten und des achten Kanalabschnitts (47, 48) direkt oder über einen dritten Kanalabschnitt (23) mit dem zweiten Ende des ersten Kanalabschnitts (21) verbunden sind,
- einen innerhalb der ersten Ebene (8) verlaufenden neunten Kanalabschnitt (49) mit einem ersten und einem zweiten Ende, dessen erstes Ende direkt oder über einen zehnten Kanalabschnitt (50) mit dem zweiten Ende des siebten Kanalabschnitts (47) verbunden ist und dessen zweites Ende dem ersten Auslass (3) zugewandt ist oder den ersten Auslass (3) bildet, und
- einen innerhalb der ersten Ebene (8) verlaufenden elften Kanalabschnitt (51) mit einem ersten und einem zweiten Ende, dessen erstes Ende direkt oder über einen zwölften Kanalabschnitt (52) mit dem zweiten Ende des achten Kanalabschnitts (48) verbunden ist und dessen zweites Ende dem zweiten Auslass (4) zugewandt ist oder den zweiten Auslass (4) bildet.

3. Schmelzekanal nach Anspruch 1, bei dem
- der erste Kanalabschnitt (21) gerade oder zumindest im Bereich seines zweiten Endes gerade verläuft, und die Projektion des zweiten Kanalabschnitts (22) in die erste Ebene relativ zum ersten Kanalabschnitt (21) oder dessen erstes Ende in einem Winkel größer als Null, vorzugsweise in einem Winkel von 90° gedreht ist, oder
- der zweite Kanalabschnitt (22a) bogenförmig gekrümmt und/oder mit einer Krümmung von 90° versehen ist.

4. Schmelzekanal nach einem der Ansprüche 1 oder 3, bei dem der vierte und der fünfte Kanalabschnitt (24, 25) gerade verlaufen, wobei insbesondere der vierte und der fünfte Kanalabschnitt (24, 25) gleiche Längen aufweisen und oder sich entlang einer gemeinsamen Längsachse erstrecken.

5. Schmelzekanal nach einem der Ansprüche 1, 3 oder 4, bei dem
- jeweils der vierte und der fünfte Kanalabschnitt (24, 25) gekrümmt, insbesondere bogenförmig gekrümmt und/oder mit einer Krümmung von 90° verlaufen, oder
- der vierte und der fünfte Kanalabschnitt (24, 25) jeweils in den Bereichen ihrer ersten Enden gerade Abschnitte (27, 28) aufweisen, die sich insbesondere entlang einer gemeinsamen Längsachse erstrecken, und jeweils einen weiteren Abschnitt (29, 29a) aufweisen, die direkt mit dem jeweiligen geraden Abschnitt verbunden sind.

6. Schmelzekanal nach einem der Ansprüche 1, 3 bis 5, bei dem der vierte und der fünfte Kanalabschnitt (24, 25) derart ausgebildet sind, dass deren zweiten Enden in dieselbe Richtung zeigen.

7. Schmelzekanal nach Anspruch 2, bei dem der siebte und der achte Kanalabschnitt (47, 48) gerade verlaufen, wobei insbesondere der siebte und der achte Kanalabschnitt (47, 48) gleiche Längen aufweisen und oder sich entlang einer gemeinsamen Längsachse erstrecken.

8. Schmelzekanal nach einem der Ansprüche 1 bis 7, bei dem der erste Kanalabschnitt (21) bogenförmig gekrümmt und/oder mit einer Krümmung von 90° versehen ist.

9. Schmelzekanal nach einem der Ansprüche 1 bis 8, bei der die erste Ebene (8) horizontal ausgerichtet ist und insbesondere die zweite Ebene (9) oberhalb der ersten Ebene (8) ausgerichtet ist.

10. Extrusionsvorrichtung, aufweisend eine Vorrichtung (1) zum Herstellen einer Kunststoffschmelze und den Schmelzekanal (10, 30, 40) nach einem der Ansprüche 1 bis 9, dessen Einlass (2) zumindest indirekt mit der Vorrichtung (1) zum Herstellen einer Kunststoffschmelze verbunden ist, um die Kunststoffschmelze durch den Schmelzekanal (10, 30, 40) zu fördern.

## Claims

1. A melt channel for an extrusion device, comprising
- an inlet (2) which is provided for being connected at least indirectly to a device (1) for producing a plastic melt during intended operation of the melt channel (10, 30), in order to convey the plastic melt through the melt channel (10, 30),
- a first and a second outlet (3, 4),
- a first channel portion (21) extending within a first plane (8) and having a first end and a second end, which with its first end faces the inlet (2) or forms the inlet (2),
- a second channel portion (22, 22a) extending within a second plane (9) and having a first and a second end, the first end of which is connected to the second end of the first channel portion (21) directly or via a third channel portion (23), wherein the second plane (9) extends in spaced relation to and in parallel to the first plane (8),
- a fourth channel portion (24) extending in the first plane (8) and having a first and a second end and a fifth channel portion (25) having a first and a second end, wherein the first ends of the fourth and the fifth channel portions (24, 25) are connected to one another directly, and the first ends of the fourth and the fifth channel portions (24, 25) are connected to the second end of the second channel portion (22) directly or via a sixth channel portion (26), the second end of the fourth channel portion (24) faces the first outlet (3) or forms the first outlet (3), and the second end of the fifth channel portion (25) faces the second outlet (4) or forms the second outlet (4),
wherein the first channel portion (21) is designed to be curved, and/or the second channel portion (22, 22a) is designed to be curved or is designed to be straight and extends such within the second plane (9) that the conveying direction of the plastic melt within the second channel portion (22a) differs from the conveying direction of the plastic melt in the area of the second end of the first channel portion (21).

2. The melt channel for an extrusion device, comprising
- an inlet (2) which is provided for being connected at least indirectly to a device (1) for producing a plastic melt during intended operation of the melt channel (40), in order to convey the plastic melt through the melt channel (40),
- a first and a second outlet (3, 4),
- a first channel portion (21) extending within a first plane (8) and having a first end and a second end, which with its first end faces the inlet (2) or forms the inlet (2), and which is in particular designed to be curved,
- a seventh channel portion (47) extending within a second plane (9) and having a first and a second end, wherein the second plane (9) extends in spaced relation to and in parallel to the first plane (8),
- an eighth channel portion (48) extending within the second plane (9) and having a first and a second end, wherein the first ends of the seventh and eighth channel portions (47, 48) are connected to one another directly, and the first ends of the seventh and the eighth channel portions (47, 48) are connected to the second end of the first channel portion (21) directly or via a third channel portion (23),
- a ninth channel portion (49) extending within the first plane (8) and having a first and a second end, the first end of which is connected to the second end of the seventh channel portion (47) directly or via a tenth channel portion (50), and the second end of which faces the first outlet (3) or forms the first outlet (3), and
- an eleventh channel portion (51) extending within the first plane (8) and having a first and a second end, the first end of which is connected to the second end of the eighth channel portion (48) directly or via a twelfth channel portion (52), and the second end of which faces the second outlet (4) or forms the second outlet (4).

3. The melt channel according to claim 1, in which
- the first channel portion (21) extends straightly or straightly at least in the area of its second end, and the projection of the second channel portion (22) into the first plane is rotated at an angle larger than zero, preferably at an angle of 90°, relative to the first channel portion (21) or its first end, or
- the second channel portion (22a) is arcuately curved and/or provided with a curvature of 90°.

4. The melt channel according to one of claims 1 or 3, in which the fourth and the fifth channel portions (24, 25) extend straightly, wherein, in particular, the fourth and the fifth channel portions (24, 25) have the same lengths and/or extend along a common longitudinal axis.

5. The melt channel according to one of claims 1, 3 or 4, in which
- each of the fourth and fifth channel portions (24, 25) extend curvedly, in particular in an arcuately curved manner and/or with a curvature of 90°, or
- the fourth and the fifth channel portions (24, 25) each comprise straight portions (27, 28), which in particular extend along a common longitudinal axis, in the area of their first ends and each comprise a further portion (29, 29a), which are directly connected to the respective straight portion.

6. The melt channel according to one of claims 1, 3 to 5, in which the fourth and the fifth channel portions (24, 25) are formed such that the second ends of these point into the same direction.

7. The melt channel according to claim 2, in which the seventh and the eighth channel portions (47, 48) extend straightly, wherein in particular the seventh and the eighth channel portions (47, 48) have the same lengths and/or extend along a common longitudinal axis.

8. The melt channel according to one of claims 1 to 7, in which the first channel portion (21) is arcuately curved and/or provided with a curvature of 90°.

9. The melt channel according to one of claims 1 to 8, in which the first plane (8) is oriented horizontally and, in particular, the second plane (9) is oriented above the first plane (8).

10. An extrusion device comprising a device (1) for producing a plastic melt and the melt channel (10, 30, 40) according to one of claims 1 to 9, the inlet (2) of which is at least indirectly connected to the device (1) for producing a plastic melt, in order to convey the plastic melt through the melt channel (10, 30, 40).

## Revendications

1. Canal pour masse fondue pour un dispositif d'extrusion, comportant
- une entrée (2) qui est prévue pour, pendant le fonctionnement conforme du canal pour masse fondue (10, 30), être raccordée au moins indirectement à un dispositif (1) pour la réalisation d'une masse fondue de matière plastique afin de transporter la masse fondue de matière plastique à travers le canal pour masse fondue (10, 30),
- une première et une deuxième sortie (3, 4),
- un premier tronçon de canal (21) situé à l'intérieur d'un premier plan (8), avec une première et une deuxième extrémité, qui est tourné avec sa première extrémité vers l'entrée (2) ou qui forme l'entrée (2),
- un deuxième tronçon de canal (22, 22a) situé à l'intérieur d'un deuxième plan (9), avec une première et une deuxième extrémité, dont la première extrémité est raccordée à la deuxième extrémité du premier tronçon de canal (21) directement ou par le biais d'un troisième tronçon de canal (23), le deuxième plan (9) étant espacé du premier plan (8) et parallèle à celui-ci,
- un quatrième tronçon de canal (24), situé dans le premier plan (8), avec une première et une deuxième extrémité, et un cinquième tronçon de canal (25), avec une première et une deuxième extrémité, les premières extrémités du quatrième et du cinquième tronçon de canal (24, 25) étant raccordées directement l'une à l'autre, et les premières extrémités du quatrième et du cinquième tronçon de canal (24, 25) étant raccordées à la deuxième extrémité du deuxième tronçon de canal (22) directement ou par le biais d'un sixième tronçon de canal (26), la deuxième extrémité du quatrième tronçon de canal (24) étant tournée vers la première sortie (3) ou formant la première sortie (3), et la deuxième extrémité du cinquième tronçon de canal (25) étant tournée vers la deuxième sortie (4) ou formant la deuxième sortie (4),
le premier tronçon de canal (21) étant réalisé de façon courbe, et/ou le deuxième tronçon de canal (22, 22a) étant réalisé de façon courbe ou étant réalisé de façon rectiligne, et situé à l'intérieur du deuxième plan (9) de telle sorte que la direction de transport de la masse fondue de matière plastique à l'intérieur du deuxième tronçon de canal (22a) est différente de la direction de transport de la masse fondue de matière plastique dans la zone de la deuxième extrémité du premier tronçon de canal (21).

2. Canal pour masse fondue pour un dispositif d'extrusion, comportant
- une entrée (2) qui est prévue pour, pendant le fonctionnement conforme du canal pour masse fondue (40), être raccordée au moins indirectement à un dispositif (1) pour la réalisation d'une masse fondue de matière plastique afin de transporter la masse fondue de matière plastique à travers le canal pour masse fondue (40),
- une première et une deuxième sortie (3, 4),
- un premier tronçon de canal (21) situé à l'intérieur d'un premier plan (8), avec une première et une deuxième extrémité, qui est tourné avec sa première extrémité vers l'entrée (2) ou qui forme l'entrée (2) et qui est réalisé en particulier de façon courbe,
- un septième tronçon de canal (47) situé à l'intérieur d'un deuxième plan (9), avec une première et une deuxième extrémité, le deuxième plan (9) étant espacé du premier plan (8) et parallèle à celui-ci,
- un huitième tronçon de canal (48) situé à l'intérieur du deuxième plan (9), avec une première et une deuxième extrémité, les premières extrémités du septième et du huitième tronçon de canal (47, 48) étant raccordées directement l'une à l'autre, et les premières extrémités du septième et du huitième tronçon de canal (47, 48) étant raccordées à la deuxième extrémité du premier tronçon de canal (21) directement ou par le biais d'un troisième tronçon de canal (23),
- un neuvième tronçon de canal (49) situé à l'intérieur du premier plan (8), avec une première et une deuxième extrémité, dont la première extrémité est raccordée à la deuxième extrémité du septième tronçon de canal (47) directement ou par le biais d'un dixième tronçon de canal (50) et dont la deuxième extrémité est tournée vers la première sortie (3) ou forme la première sortie (3), et
- un onzième tronçon de canal (51) situé à l'intérieur du premier plan (8), avec une première et une deuxième extrémité, dont la première extrémité est raccordée à la deuxième extrémité du huitième tronçon de canal (48) directement ou par le biais d'un douzième tronçon de canal (52) et dont la deuxième extrémité est tournée vers la deuxième sortie (4) ou forme la deuxième sortie (4).

3. Canal pour masse fondue selon la revendication 1, dans lequel
- le premier tronçon de canal (21) est situé de façon rectiligne, ou de façon rectiligne au moins dans la zone de sa deuxième extrémité, et la projection du deuxième tronçon de canal (22) dans le premier plan par rapport au premier tronçon de canal (21), ou sa première extrémité, est tournée selon un angle supérieur à zéro, de préférence selon un angle de 90°, ou
- le deuxième tronçon de canal (22a) est courbé en forme d'arc et/ou muni d'une courbure de 90°.

4. Canal pour masse fondue selon l'une des revendications 1 ou 3, dans lequel le quatrième et le cinquième tronçon de canal (24, 25) sont situés de façon rectiligne, en particulier le quatrième et le cinquième tronçon de canal (24, 25) présentant des longueurs identiques ou s'étendant le long d'un axe longitudinal commun.

5. Canal pour masse fondue selon l'une des revendications 1, 3 ou 4, dans lequel
- respectivement le quatrième et le cinquième tronçon de canal (24, 25) sont situés de façon courbe, en particulier de façon courbe en forme d'arc et/ou avec une courbure de 90°, ou
- le quatrième et le cinquième tronçon de canal (24, 25) comportent respectivement dans les zones de leurs premières extrémités des tronçons (27, 28) rectilignes qui s'étendent en particulier le long d'un axe longitudinal commun, et comportent respectivement un autre tronçon (29, 29a) qui sont raccordés directement au tronçon rectiligne respectif.

6. Canal pour masse fondue selon l'une des revendications 1, 3 à 5, dans lequel le quatrième et le cinquième tronçon de canal (24, 25) sont constitués de telle sorte que leurs deuxièmes extrémités sont dirigées dans la même direction.

7. Canal pour masse fondue selon la revendication 2, dans lequel le septième et le huitième tronçon de canal (47, 48) sont situés de façon rectiligne, en particulier le septième et le huitième tronçon de canal (47, 48) présentant des longueurs identiques ou s'étendant le long d'un axe longitudinal commun.

8. Canal pour masse fondue selon l'une des revendications 1 à 7, dans lequel le premier tronçon de canal (21) est courbé en forme d'arc et/ou est muni d'une courbure de 90°.

9. Canal pour masse fondue selon l'une des revendications 1 à 8, dans lequel le premier plan (8) est orienté horizontalement et en particulier le deuxième plan (9) est orienté au-dessus du premier plan (8).

10. Dispositif d'extrusion, comportant un dispositif (1) pour la réalisation d'une masse fondue de matière plastique et le canal pour masse fondue (10, 30, 40) selon l'une des revendications 1 à 9 dont l'entrée (2) est raccordée au moins indirectement au dispositif (1) pour la réalisation d'une masse fondue de matière plastique afin de transporter la masse fondue de matière plastique à travers le canal pour masse fondue (10, 30, 40).
